# EUROPÄISCHE PATENTSCHRIFT

(11) **EP 2 920 754 B1**
(45) Veröffentlichungstag und Bekanntmachung des Hinweises auf die Patenterteilung: **14.06.2017**
(21) Anmeldenummer: 13776812.3
(22) Anmeldetag: 15.10.2013
(51) Int. Cl.: G06Q 20/38, G06Q 40/02, G06Q 30/06

(54) **VERFAHREN ZUR DURCHFÜHRUNG VON TRANSAKTIONEN**
METHOD FOR CARRYING OUT TRANSACTIONS
PROCÉDÉ DE RÉALISATION DE TRANSACTIONS

(30) Priorität: 14.11.2012 DE 102012220774
(43) Veröffentlichungstag der Anmeldung: 23.09.2015
(73) Patentinhaber: Giesen, Heinz, 48147 Münster (DE)
(72) Erfinder: Giesen, Heinz, 48147 Münster (DE)
(74) Vertreter: Richardt Patentanwälte PartG mbB
(86) Internationale Anmeldenummer: PCT/EP2013/071495
(87) Internationale Veröffentlichungsnummer: WO 2014/075862

(56) Entgegenhaltungen:
- EP-A1- 1 150 227
- WO-A1-02/19211
- WO-A1-2004/036513
- WO-A1-2008/108861
- WO-A1-2012/125531
- US-A1- 2012 089 519

## Beschreibung

Die Erfindung betrifft ein Verfahren zur Durchführung von Transaktionen zwischen einer Anzahl von Teilnehmern.

Aus dem Stand der Technik sind insbesondere für den Finanzsektor eine Vielzahl von Verfahren zur Durchführung von Transaktionen bekannt. Ein häufiger Schwachpunkt dieser Verfahren ist die Manipulierbarkeit der transaktionslimitierenden Daten, wie beispielsweise Bankverbindungen von Sendern und Empfängern einer Überweisung. Dies ist insbesondere im Bereich des Online-Bankings, aufgrund der Zugreifbarkeit des Transaktionskanals, beispielsweise durch man-in-the-middle-Attacken, problematisch. Um diese Angriffe zu verhindern, wurde die Verwendung von vorgangsindividuellen Transaktionsnummern (TAN-Verfahren), welche nur dem Überweisenden und dem Finanzinstitut bekannt sind und die bei jedem Transaktionsauftrag mit übermittelt werden müssen, eingeführt. Dieses Verfahren wurde unter anderem durch das iTAN, oder das chipTAN-Verfahren weiter hinsichtlich seiner Sicherheit gegenüber Manipulationen verbessert, wobei sich insbesondere das chipTAN durch einen Medienbruch auszeichnet. Ein Medienbruch bedeutet hierbei den Übergang von einem Medium, beispielsweise dem Internet, zu einem anderen Medium, beispielsweise der visuellen Erfassung eines Bildes. Hierdurch wird die Angreifbarkeit des Verfahrens reduziert, da für eine Manipulation des Verfahrens beide Medien angegriffen werden müssten.
Bezahlsysteme und entsprechende Verfahren, sowie Systeme zur Vereinfachung und Authentisierung von Transaktionen sind beispielsweise aus den Dokumenten WO 02/19211 A1, EP 1 150 227 A1, WO 2004/036513 A1, sowie US 2012/0089519 A1 bekannt.Die WO 2012/125531 A1 offenbart ein mobiles Bezahlsystem mittels Einlesen von QR-Codes.

Der Erfindung liegt demgegenüber die Aufgabe zugrunde, ein verbessertes Verfahren zur Durchführung von Transaktionen zu schaffen.
Die der Erfindung zugrunde liegende Aufgabe wird mit den Merkmalen von Patentanspruch 1 gelöst. Ausführungsformen der Erfindung sind in den abhängigen Patentansprüchen angegeben.
Nach einer Ausführungsform der Erfindung wird ein Verfahren zur Durchführung von Transaktionen zwischen einer Anzahl von Teilnehmern geschaffen. Den Teilnehmern der Transaktion ist jeweils ein eindeutiges Pseudonym zugeordnet. Die Zuordnung der Pseudonyme zu den jeweiligen Teilnehmern ist auf einem Notarserver hinterlegt. Weiter sind auf dem Notarserver die Transaktionsdaten der Teilnehmer gespeichert und den Teilnehmern eindeutig zugeordnet. Zur Durchführung des Verfahrens wird weiter ein Anwendungsprogramm und mindestens ein Transaktionsserver benötigt.

Transaktionsdaten sind hierbei solche Daten, ohne deren Kenntnis eine Durchführung einer Transaktion nicht möglich ist. Im Falle einer Überweisung wären die Transaktionsdaten beispielsweise die Bankverbindungen der Teilnehmer, im Falle der Übermittlung einer Nachricht beispielsweise e-Mail-Adressen. Transaktionsdaten bleiben für eine Vielzahl von Transaktionen gleich, können also als Stammdaten bezeichnet werden.
Ein Notarserver ist wie auch ein Transaktionsserver ein Servercomputer. Dieser muss nicht zwingend eine physische Entität darstellen, sondern kann auch vollständig virtuell ausgeführt sein, beispielsweise als ausgelagerte Recheneinheit in einem Computernetzwerk. Dabei ist ein Notarserver so ausgeführt, dass die gespeicherten Daten des Notarservers vor einem Zugriff durch Dritte geschützt sind und nur auf Anfrage eines Transaktionsservers dem Transaktionsserver bereitgestellt werden.
In einem ersten Schritt des Verfahrens wird das Pseudonym eines ersten Teilnehmers durch das Anwendungsprogramm erfasst. Die Erfassung des Pseudonyms kann beispielsweise durch manuelle Eingabe oder durch das Auslesen eines Datenspeichers geschehen. Am Beispiel einer Finanztransaktion wäre der erste Teilnehmer der Überweisende bzw. Sender. In einem zweiten Schritt des Verfahrens werden durch das Anwendungsprogramm die Pseudonyme einer beliebigen Zahl weiterer Teilnehmer erfasst. Hierbei erfolgt die Erfassung der Pseudonyme vorzugsweise auf sensorischem Weg, also beispielsweise durch Auslesen einer Magnetkarte oder die visuelle Erfassung eines Barcodes, erfindungsgemäß eines QR-Codes. Am Beispiel einer Finanztransaktion wären die besagten weiteren Teilnehmer die Empfänger einer Überweisung. Sobald das Anwendungsprogramm alle Teilnehmer, die an der Transaktion beteiligt sind, erfasst hat, werden dem Anwendungsprogramm die Transaktionsparameter mitgeteilt. Wiederum am Beispiel einer Finanztransaktion wären die Transaktionsparameter der zu überweisende Betrag oder ein Verwendungszweck. Transaktionsparameter können also für jede Transaktion unterschiedlich sein und als Bewegungsdaten bezeichnet werden.
Nachdem die Pseudonyme der Teilnehmer sowie die Transaktionsparameter durch das Anwendungsprogramm erfasst wurden, wird der gesamte Transaktionsdatensatz, welcher eben diese Pseudonyme und Transaktionsparameter beinhaltet, an zumindest einen Transaktionsserver weitergeleitet. Die Weiterleitung kann hierbei beispielsweise über das Internet oder einen beliebigen anderen Kommunikationskanal erfolgen. Sobald der Transaktionsserver einen Transaktionsdatensatz erhält, extrahiert er aus diesem die Pseudonyme der beteiligten Teilnehmer und übermittelt diese an den Notarserver. Da auf dem Notarserver eine Zuordnung der Pseudonyme zu den entsprechenden Teilnehmern hinterlegt ist, ist der Notarserver in der Lage, die Teilnehmer anhand ihrer Pseudonyme zu identifizieren. Daher ist der Notarserver in der Lage, dem Transaktionsserver die Transaktionsdaten der Teilnehmer zu übermitteln. Sobald der Transaktionsserver die Transaktionsdaten der Teilnehmer empfangenen hat, kann er entweder die Transaktion durchführen oder anstoßen.

Die beschriebene Ausführungsform ist besonders vorteilhaft, da der Transaktionsdatensatz lediglich die Pseudonyme der Teilnehmer enthält. Es ist also nicht möglich, die Transaktionsdaten, wie beispielsweise Bankverbindungen, im Transaktionsdatensatz zu manipulieren, außer durch vollständiges Austauschen der Pseudonyme. Dies setzt allerdings voraus, dass ein etwaiger Angreifer ebenfalls auf dem Notarserver registriert ist. Hierdurch ist ein Angreifer leicht zu identifizieren. Einzig die Transaktionsparameter können manipuliert werden, was jedoch im Allgemeinen keinen Schaden verursacht, da die Teilnehmer der Transaktion dies bemerken und korrigieren können. Im Falle einer Finanztransaktion könnte so beispielsweise lediglich der zwischen den Teilnehmern überwiesene Betrag verändert werden. Eine Umleitung des Zahlungsverkehrs auf ein fremdes Konto wäre ohne eine Enthüllung der Identität eines Angreifers jedoch nicht möglich.

Nach einer Ausführungsform der Erfindung sind den Pseudonymen der Teilnehmer jeweils eine Reihe von Daten zugeordnet. Damit eine Transaktion durchgeführt werden kann, müssen zunächst die Transaktionsdaten eines jeden Teilnehmers hinterlegt sein. Diese werden wie zuvor beschrieben dem Transaktionsserver durch den Notarserver auf Anfrage bereitgestellt. Neben diesen Transaktionsdaten sind weiter Informationen gespeichert, die einen Teilnehmer eindeutig identifizieren. Dies können zum Beispiel Name, Adresse, Geburtsort und Geburtsdatum, eine Ausweisnummer oder eine Kombination dieser Daten sein. Weiter ist zu jedem Teilnehmer eine eindeutige Kanal-Information auf dem Notarserver hinterlegt, welche geeignet ist, einen Kommunikationskanal zwischen Notarserver und Anwendungsprogramm zu spezifizieren. Dies kann beispielsweise eine E-Mail-Adresse des Teilnehmers sein.

Die Aufnahme der vorgenannten Daten kann beispielsweise bei der Registrierung eines Teilnehmers am Notarserver dadurch erfolgen, dass jeder Teilnehmer ein Formular mit persönlichen Daten ausfüllt. Die eingetragenen Daten werden anschließend in den Notarserver eingegeben, oder durch diesen erfasst. Die Daten der Teilnehmer sind hierbei nur dem Notarserver bekannt und vor dem Zugriff durch andere geschützt. Im Zuge der Registrierung kann weiter beispielsweise durch eine Kontrolle eines Ausweisdokuments die Identität des Teilnehmers verifiziert werden.

Wie zuvor erwähnt, wird jedem Teilnehmer ein eindeutiges Pseudonym zugeordnet. Nach einer Ausführungsform der Erfindung wird als Pseudonym der verschlüsselte Datensatz eines Teilnehmers festgelegt. Der zur Verschlüsselung verwendete Schlüssel wird ausschließlich auf dem Notarserver hinterlegt, sodass das Pseudonym nur durch den Notarserver zu entschlüsseln ist. Hierdurch muss nicht zwingend der vollständige Datensatz eines jeden Teilnehmers auf dem Notarserver hinterlegt werden, sondern lediglich eine Zuordnung von Pseudonymen und Schlüsseln. Dabei kann zur Verschlüsselung ein beliebiges Verfahren verwendet werden. Weiter ist es an dieser Stelle möglich den Datensatz symmetrisch unter Verwendung eines One-Time-Pad zu verschlüsseln, sodass eine Entschlüsselung des Pseudonyms ohne Kenntnis des Schlüssels ausgeschlossen werden kann. Da die Ver- und Entschlüsselung des Pseudonyms durch die selbe Entität erfolgt, ist die Problematik, die eine Übermittlung des Schlüssels mit sich bringen würde hinfällig.

Nach einer Ausführungsform der Erfindung wird als Pseudonym eines Teilnehmers der QR-Code des zuvor beschriebenen verschlüsselten Datensatzes des Teilnehmers festgelegt. Die Verwendung des Pseudonyms in Form eines QR-Codes erleichtert im späteren Ablauf die Erfassung des Pseudonyms, da ein QR-Code mit geringem Aufwand visuell erfasst werden kann, beispielsweise durch die Kamera eines Smartphones oder Tablet-PCs.

Wie zuvor beschrieben, ist es möglich, die Transaktionsparameter, welche in einem Transaktionsdatensatz enthalten sind, zu manipulieren. Dies kann allerdings gemäß einer Ausführungsform der Erfindung verhindert werden, indem ein Transaktionsdatensatz vor der Übermittelung von der Anwendungssoftware zum Transaktionsserver durch die Anwendungssoftware verschlüsselt wird. Die Entschlüsselung des Transaktionsdatensatzes erfolgt dann durch den Transaktionsserver. Durch eine geeignete Wahl des Verschlüsselungsverfahrens kann die Sicherheit des zuvor beschriebenen Verfahrens an die jeweiligen Sicherheitsanforderungen angepasst werden.

Die Art der Verschlüsselung sowie der verwendete Schlüssel können gemäß einer Ausführungsform der Erfindung für jede Art von Transaktion oder auch für jede Transaktion selbst individuell festgelegt werden. Es können hierbei symmetrische, asymmetrische oder auch hybride Verschlüsselungsverfahren verwendet werden. Weiter ist es möglich, einen Transaktionsdatensatz nur teilweise zu verschlüsseln. So können zum Beispiel kritische Transaktionsparameter, wie beispielsweise ein Überweisungsbetrag oder eine geheime Information geschützt werden, während unkritische Transaktionsparameter, wie beispielsweise ein Begleittext, nicht verschlüsselt werden müssen.

Nach einer Ausführungsform der Erfindung wird eine Transaktion nur dann durchgeführt, wenn zumindest ein Teil der Teilnehmer der Transaktion durch den Transaktionsserver oder den Notarserver authentifiziert wurde. Hierbei erfolgt die Authentifizierung der Teilnehmer vorzugsweise erst nach Eingang eines Transaktionsdatensatzes bei einem Transaktionsserver. Dadurch, dass die Teilnehmer der Transaktion durch Transaktions- oder Notarserver authentifiziert wurden, wird vor der Durchführung der Transaktion sichergestellt, dass die im Transaktionsdatensatz enthaltenen Pseudonyme der Teilnehmer nicht ausgetauscht wurden. Ein Austauschen der Pseudonyme würde nach dieser Ausführungsform also spätestens bei der Authentifizierung der Teilnehmer erkannt.

Nach einer Ausführungsform der Erfindung erfolgt die Authentifizierung der Teilnehmer über Anwendungsprogramme, welche jeweils auf die Teilnehmer registriert sind unter zusätzlicher Verwendung eines Gültigkeitszeitfensters für einen Transaktionsdatensatz. Hierbei ist vorzugsweise jedem Teilnehmer ein eigenes Anwendungsprogramm zugeordnet und die Zuordnung der Anwendungsprogramme zu den Teilnehmern auf dem Notarserver hinterlegt. Soll nun ein Transaktionsdatensatz an einen Transaktionsserver übermittelt werden, wird zunächst für diesen Transaktionsdatensatz ein Gültigkeitszeitfenster festgelegt. Der Transaktionsdatensatz wird dann durch einen Transaktionsserver nur dann verarbeitet, wenn der Verarbeitungszeitpunkt in das Gültigkeitszeitfenster des Transaktionsdatensatzes fällt. Hierzu wird durch das Anwendungsprogramm ein Zeitstempel in den Transaktionsdatensatz eingefügt. Dieser dokumentiert den Zeitpunkt, an dem der Transaktionsdatensatz erstellt wurde.

Geht nun ein Transaktionsdatensatz bei einem Transaktionsserver ein, überprüft dieser, ob die aktuelle Zeit innerhalb des Gültigkeitszeitfensters unter Berücksichtigung des Zeitstempels des Transaktionsdatensatzes liegt. Ist dies der Fall, wird über das oder die Anwendungsprogramme der Teilnehmer eine Bestätigung des Transaktionsauftrags angefordert. Hierbei kann die Anforderung entweder durch den Transaktionsserver oder auch den Notarserver versendet werden. Eine Bestätigungsanforderung kann beispielsweise darin bestehen, dass, ausgelöst durch Transaktions- oder Notarserver, auf dem Anwendungsprogramm der Teilnehmer ein Popup-Fenster geöffnet wird, weiches den Teilnehmer darüber informiert, dass ein Transaktionsauftrag eingegangen ist. Es besteht dann die Möglichkeit, diesen Transaktionsauftrag zu bestätigen oder abzulehnen. Erst wenn alle angeforderte Bestätigungen eingegangen sind, wird eine Transaktion durchgeführt.

Für den Fall, dass der Zeitpunkt der Verarbeitung eines Transaktionsdatensatzes außerhalb des Gültigkeitszeitfensters liegt, wird der Transaktionsdatensatz durch den Transaktionsserver verworfen. Hierdurch wird ein Zurückhalten der Transaktionsdatensätze zur späteren Verarbeitung verhindert. Durch die Authentifizierung der Teilnehmer wird weiter vermieden, dass eine Transaktion an einen falschen Empfänger erfolgt. Es kann beispielsweise der Sender seinerseits mit der Bestätigung des Transaktionsauftrags warten, bis bei den Empfängern die Anforderung einer Bestätigung eingegangen ist. Sobald eine Bestätigungsanforderung bei den Empfängern eingegangen ist, ist sichergestellt, dass die Pseudonyme der Empfänger nicht manipuliert wurden.

Nach einer Ausführungsform der Erfindung ist das Anwendungsprogramm, welches die Pseudonyme erfasst und an welches die Transaktionsparameter übermittelt werden, auf einen der Teilnehmer registriert. Hierdurch ist dessen Pseudonym dem Anwendungsprogramm bekannt und muss nicht für jeden Transaktionsauftrag erneut erfasst werden. Wird ein Transaktionsdatensatz von diesem Anwendungsprogramm verschickt, wird automatisch das Pseudonym des Teilnehmers, auf den das Anwendungsprogramm registriert wurde, in den Transaktionsdatensatz eingefügt. Weiter ist durch die Registrierung des Anwendungsprogramms auf den Teilnehmer eine eindeutige Zuordnung des Anwendungsprogramms zu diesem Teilnehmer durch den Notarserver oder auch den Transaktionsserver möglich. Hierdurch können Transaktionsdatensätze, welche von dem registrierten Anwendungsprogramm an den Transaktionsserver gesendet werden, einem ersten Teilnehmer eindeutig zugeordnet werden. Eine unbemerkte Manipulation des Pseudonyms des ersten Teilnehmers ist damit ausgeschlossen. Weiter kann gemäß der nachfolgend beschriebenen Ausführungsform die Registrierung eines Anwendungsprogramms auf einen Teilnehmer auch eine Zuordnung des Anwendungsprogramms zu einem Endgerät enthalten. Hierdurch kann verhindert werden, dass das Anwendungsprogramm vom Endgerät des Teilnehmers extrahiert und auf einem anderen Endgerät gegen den Willen des Teilnehmers genutzt wird.

Nach einer Ausführungsform der Erfindung beinhaltet die Registrierung eines Anwendungsprogramms auf einen Teilnehmer folgende Schritte:

Zunächst wird durch das Anwendungsprogramm das Pseudonym des Teilnehmers, auf den das Anwendungsprogramm registriert werden soll, sensorisch erfasst. Dies kann wahlweise während der Installation des Anwendungsprogramms oder danach geschehen. Anschließend ermittelt das Anwendungsprogramm einen Parameter, welcher das Endgerät, auf dem das Anwendungsprogramm installiert ist, eindeutig identifiziert. Dies kann beispielsweise der Globally Unique Identifier (GUID) des Endgeräts sein, welcher meist in der Hardware des Endgeräts hinterlegt ist. Anschließend übermittelt das Anwendungsprogramm das Pseudonym des Teilnehmers, auf den das Anwendungsprogramm registriert werden soll, sowie den das Endgerät eindeutig identifizierenden Parameter an den Notarserver. Bevor diese Daten auf dem Notarserver gespeichert werden, muss jedoch zunächst verifiziert werden, dass es sich bei dem Teilnehmer, der eine Registrierung einer Anwendungssoftware auf ein Pseudonym durchführen will, auch tatsächlich um den Teilnehmer handelt, welcher auf dem Notarserver zu diesem Pseudonym zugeordnet ist. Hierzu wird neben den bereits genannten Daten eine dem Teilnehmer durch den Notarserver eindeutig zuordenbare Teilnehmer-Information an den Notarserver übermittelt. Dies kann beispielsweise eine Sicherheitsfrage, eine persönliche Information, welche im Datensatz des Teilnehmers enthalten ist, oder auch eine beliebige Nummer sein, die bei der Anmeldung des Teilnehmers am Notarserver erzeugt wurde und nur dem Teilnehmer und dem Notarserver bekannt ist. Bei Eingang einer Registrierungsanfrage am Notarserver überprüft dieser nun, ob die übermittelte Teilnehmer-Information im Datensatz des Teilnehmers, welchem das Pseudonym zugeordnet ist, enthalten ist. Ist dies der Fall, wird dem Datensatz des Teilnehmers zusätzlich eine Information über das Endgerät, auf dem ein Anwendungsprogramm registriert wurde, hinzugefügt.

Nach einer Ausführungsform der Erfindung wird ein System vorgestellt, welches mindestens einen Transaktionsserver und einen Notarserver beinhaltet. Ein Transaktionsserver ist hierbei angepasst um Transaktionsdatensätze, die Transaktionsparameter und Pseudonyme von Teilnehmern beinhalten, zu lesen und eine entsprechende Transaktion durchzuführen und/oder anzustoßen. Der Notarserver enthält Datensätze der Teilnehmer des Verfahrens, wobei die Datensätze folgende Informationen beinhalten:
- Das Pseudonym eines Teilnehmers,
- Daten, die den Teilnehmer eindeutig identifizieren,
- Transaktionsdaten des Teilnehmers;
wobei der Notarserver auf Anfrage des Transaktionsservers die transaktionsrelevanten Daten, die zu einem im Transaktionsdatensatz enthaltenen Pseudonym gehören, dem Transaktionsserver bereitstellt.

Nach einer Ausführungsform der Erfindung beinhaltet das zuvor beschriebene System weiter ein Endgerät eines Teilnehmers, wobei auf dem Endgerät des Teilnehmers ein Anwendungsprogramm, welches die Durchführung des zuvor beschriebenen Verfahrens ermöglicht, installiert ist.

Nach einer Ausführungsform der Erfindung ist der Notarserver des zuvor beschriebenen System angepasst, das Endgerät, auf dem das Anwendungsprogramm installiert ist, einem Teilnehmer eindeutig zuzuordnen.

Nach einer Ausführungsform der Erfindung wird ein Computerprogrammprodukt vorgestellt, welches angepasst ist um die zuvor beschrieben Verfahrensschritte durchzuführen.

Im Weiteren werden Ausführungsformen der Erfindung mit Bezugnahme auf die Zeichnungen näher erläutert. Es zeigen:
- Figur 1: ein Flussdiagramm eines erfindungsgemäßen Verfahrensablaufs,
- Figur 2: ein Flussdiagramm eines erfindungsgemäßen Verfahrensablaufs mit einem registrierten Anwendungsprogramm,
- Figur 3: ein Flussdiagramm eines erfindungsgemäßen Verfahrensablaufs mit dem zusätzlichen Schritt der Authentifizierung der Teilnehmer,
- Figur 4: ein Flussdiagramm eines erfindungsgemäßen Verfahrensablaufs mit registriertem Programm und Authentifizierung der Teilnehmer,
- Figur 5: ein Flussdiagramm eines erfindungsgemäßen Verfahrensablaufs zur Registrierung eines Anwendungsprogramms auf einem Teilnehmer,
- Figur 6: ein Blockdiagramm eines Systems, welches die Durchführung eines erfindungsgemäßen Verfahrens ermöglicht.

Im Weiteren werden Elemente der nachfolgenden Ausführungsformen, die einander entsprechen oder identisch sind, jeweils mit denselben Bezugszeichen gekennzeichnet.

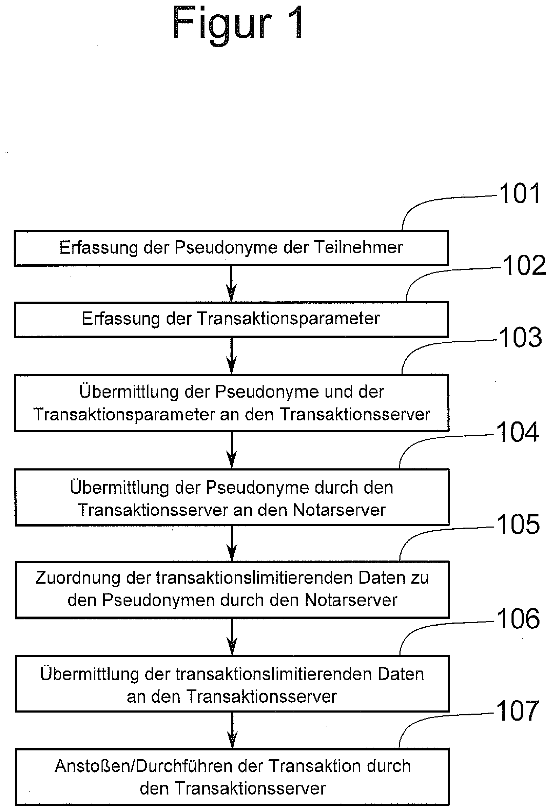

Die Figur 1 zeigt ein Flussdiagramm einer erfindungsgemäßen Ausführungsform des Verfahrens. Eine Durchführbarkeit des Verfahrens setzt zumindest das Vorhandensein von einem Transaktionsserver, einem Notarserver, einer Anzahl von Teilnehmern sowie ein Anwendungsprogramm voraus. Dabei ist jedem Teilnehmer ein eindeutiges Pseudonym zugeordnet, wobei die Zuordnung der Pseudonyme zu den Teilnehmern auf dem Notarserver hinterlegt ist. Weiterhin sind auf dem Notarserver den Teilnehmern deren Transaktionsdaten zugeordnet. Die Transaktionsdaten eines Teilnehmers können beispielsweise dessen Bankverbindungen oder ähnliches sein.

In einem ersten Schritt 101 werden die Pseudonyme der Teilnehmer, welche an der Transaktion beteiligt sind, erfasst. Die Erfassung der Pseudonyme erfolgt hierbei durch das Anwendungsprogramm, beispielsweise durch Auslesen eines Speichers, in dem die Pseudonyme hinterlegt sind oder durch die visuelle Erfassung eines Barcodes, welcher die Pseudonyme enthält. Nachdem die Pseudonyme der Teilnehmer erfasst wurden, werden durch das Anwendungsprogramm die Transaktionsparameter erfasst 102. Die Transaktionsparameter können beispielsweise ein zwischen zwei Teilnehmern zu überweisender Geldbetrag sein oder eine zu übermittelnde Nachricht.

Die Kombination aus Pseudonym und Transaktionsparametern stellt einen Transaktionsdatensatz dar. Dieser wird im nächsten Schritt 103 durch das Anwendungsprogramm an einen Transaktionsserver übermittelt. Der Transaktionsserver kann jedoch nicht die Pseudonyme den Teilnehmern zuordnen. Daher erfolgt in einem vierten Schritt 104 die Übermittlung der Pseudonyme, welche im Transaktionsdatensatz enthalten sind, an den Notarserver durch den Transaktionsserver. Der Notarserver ist wiederum aufgrund der bei ihm hinterlegten Zuordnung von Teilnehmern und Pseudonymen in der Lage, den Pseudonymen, welche vom Transaktionsserver übermittelt wurden, die entsprechenden Teilnehmer zuzuordnen 105. Da zu jedem Teilnehmer auch dessen Transaktionsdaten hinterlegt sind, können diese durch den Notarserver an den Transaktionsserver übermittelt werden 106, sodass der Transaktionsserver eine Transaktion gemäß des zuvor erhaltenen Transaktionsdatensatzes anstoßen oder durchführen kann 107.

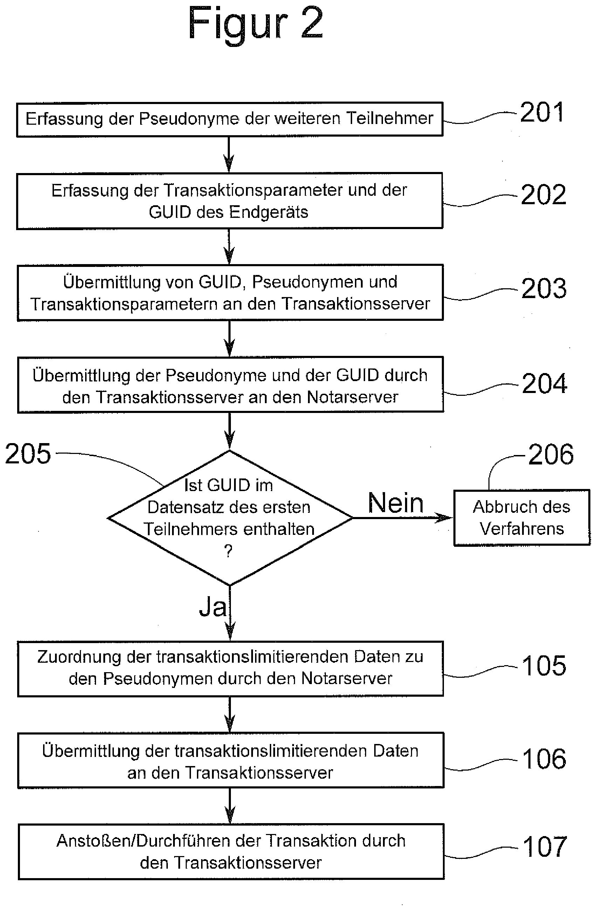

Die Figur 2 zeigt ein Flussdiagramm einer erfindungsgemäßen Ausführungsform des Verfahrens, wobei das Verfahren um die Registrierung des Anwendungsprogramms, welches den Transaktionsdatensatz versendet, auf einen der Teilnehmer erweitert ist. Dabei wird im Zuge der Registrierung des Programms der Globally Unique Identifier (GUID) des Endgeräts, auf dem das Anwendungsprogramm installiert ist, auf dem Notarserver dem Datensatz des Teilnehmers, welcher das Anwendungsprogramm registriert, zugeordnet.

Da das Anwendungsprogramm auf einen der Teilnehmer registriert ist, ist dessen Pseudonym dem Anwendungsprogramm bekannt. Daher werden im ersten Schritt 201 lediglich die Pseudonyme der weiteren Teilnehmer durch das Anwendungsprogramm erfasst. Das Pseudonym des ersten Teilnehmers, welcher das Anwendungsprogramm registriert hat, wird durch das Anwendungsprogramm dem Datensatz hinzugefügt. Im zweiten Schritt 202 wird neben den Transaktionsparametern der Globally Unique Identifier (GUID) des Endgeräts durch das Anwendungsprogramm erfasst. Im dritten Schritt 203 wird der Transaktionsdatensatz, weicher gegenüber der in Figur 1 gezeigten Ausführungsform um die GUID des verwendeten Endgeräts erweitert wurde, durch das Anwendungsprogramm an den Transaktionsserver übermittelt.

Analog zum zuvor beschriebenen Verfahren werden die Pseudonyme der Teilnehmer durch den Transaktionsserver aus dem Transaktionsdatensatz extrahiert und an den Notarserver übermittelt. Zusätzlich zu den Pseudonymen wird auch die GUID, welche im Transaktionsdatensatz enthalten ist, an den Notarserver weitergegeben. Der Notarserver prüft nun, ob die erhaltene GUID im Datensatz des ersten Teilnehmers enthalten ist 205. Ist dies nicht der Fall, wird das Verfahren abgebrochen 206. Stimmt jedoch die Zuordnung der GUID mit dem Pseudonym des Teilnehmers überein, so werden die Verfahrensschritte 105 - 107 analog zu dem in Figur 1 dargestellten Verfahren durchgeführt.

Durch die Verwendung eines registrierten Anwendungsprogramms wird eine unbemerkte Manipulation des Pseudonyms des ersten Teilnehmers verhindert. Sobald das Pseudonym des ersten Teilnehmers manipuliert wurde, stimmt die Zuordnung des Pseudonyms zu der übermittelten GUID nicht mit den Informationen des Notarservers überein, sodass das Verfahren sofort abgebrochen wird.

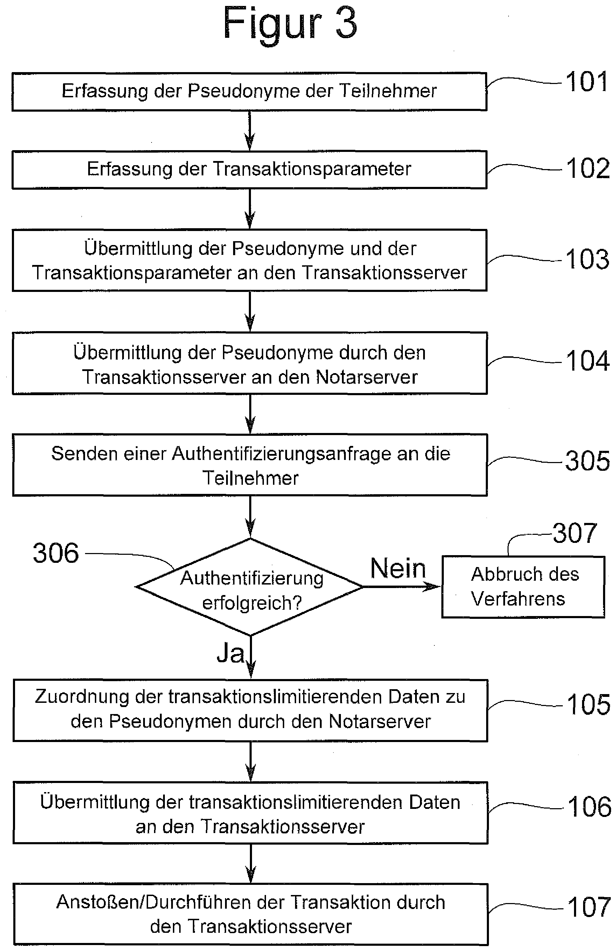

Die Figur 3 zeigt ein Flussdiagramm einer erfindungsgemäßen Ausführungsform des Verfahrens, wobei das Verfahren um die Authentifizierung der Teilnehmer erweitert ist. Die Authentifizierung setzt voraus, dass die Teilnehmer des Verfahrens über ein Anwendungsprogramm verführen, dass auf sie registriert ist.

Die Verfahrensschritte 101-104 verlaufen identisch zu jenen der Figur 1. Nachdem der Notarserver die Pseudonyme, welche im Transaktionsdatensatz enthalten sind, vom Transaktionsserver erhalten hat, wird eine Authentifizierungsanfrage an die Teilnehmer gesendet 305. Hierzu ist es notwendig, dass jeder Teilnehmer über ein registriertes Anwendungsprogramm verfügt. Der Notarserver muss überdies in der Lage sein, mit den Anwendungsprogrammen der Teilnehmer zu kommunizieren.

Zum Zwecke der Authentifizierung kann beispielsweise eine Anfrage an das Anwendungsprogramm der Teilnehmer geschickt werden, welche durch die Teilnehmer manuell bestätigt werden muss. Die Anfrage kann hierbei beispielsweise die Information enthalten, zwischen wem eine Transaktion durchgeführt werden soll und welche Transaktionsparameter übermittelt wurden.

Wird die Authentifizierungsanfrage 306 von wenigstens einem Teilnehmer nicht bestätigt, so wird das Verfahren abgebrochen 307. Wenn jedoch alle Teilnehmer die Authentifizierungsanfrage bestätigen, wird das Verfahren gemäß den zuvor beschriebenen Schritten 105 - 107 fortgesetzt.

Durch den zusätzlichen Schritt der Authentifizierungsabfrage kann beispielsweise ein erster Teilnehmer, welcher eine Transaktion an die übrigen Teilnehmer durchführen will, seinerseits mit der Bestätigung der Authentifizierungsanfrage warten, bis er weiß, dass alle anderen Teilnehmer ebenfalls die Authentifizierungsanfrage bestätigt haben. Dies kann beispielsweise dadurch realisiert sein, dass der erste Teilnehmer die weiteren Teilnehmer anruft und nachfragt, ob eine Authentifizierungsanfrage, welche der vorgesehenen Transaktion entspricht, eingegangen ist. Sobald dies der Fall ist, ist ausgeschlossen, dass die Transaktion, welche durchgeführt werden soll, an andere Personen umgeleitet wird.

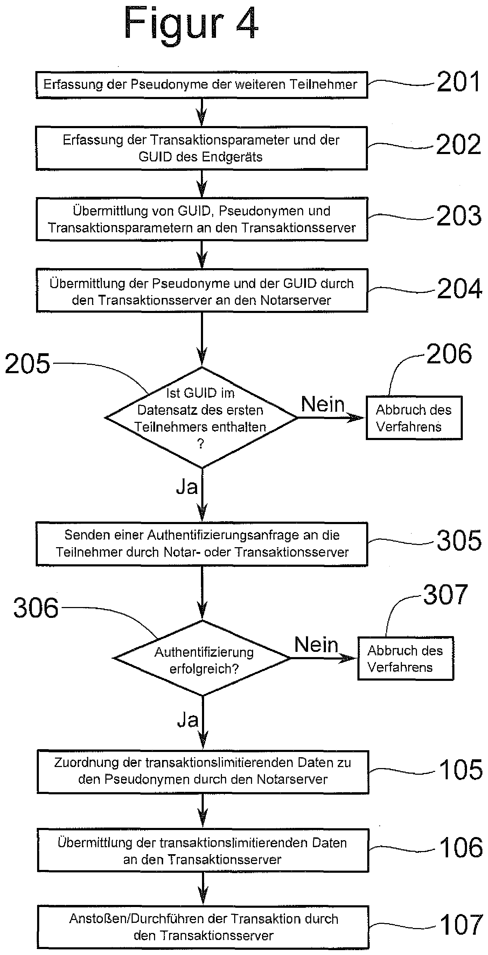

Die Figur 4 ist ein Flussdiagramm einer erfindungsgemäßen Ausführungsform des Verfahrens, wobei das Verfahren um die zusätzlichen Schritte der Registrierung eines Anwendungsprogrammes sowie der Anfrage einer Authentifizierung erweitert ist.

Die Verfahrensschritte 201 - 204 sind analog zu jenen in Figur 2. Sobald die GUID, welche im Transaktionsdatensatz enthalten ist, dem Pseudonym des ersten Teilnehmers eindeutig zugeordnet werden konnte, wird eine Authentifizierungsanfrage an die übrigen Teilnehmer durch den Notar- oder den Transaktionsserver gesendet 305. Erst nach erfolgreicher Authentifizierung der weiteren Teilnehmer werden die Verfahrensschritte 105-107 gemäß den Beschreibungen zu Figur 1 durchgeführt.

Dabei können die Sicherheitsabfragen 204 sowie 305 auch in Ihrer Reihenfolge vertauscht sein. Insgesamt ist durch diese Ausprägungsform des Verfahrens die Identität des ersten Teilnehmers aufgrund der Registrierung gesichert, während die Identität der weiteren Teilnehmer aufgrund der Authentifizierungsanfrage gesichert ist. Somit wird insgesamt eine unbemerkte Manipulation von Pseudonymen der Teilnehmer der Transaktion verhindert.

In den Figuren 1 -4 wurde die Verschlüsselung eines Transaktionsdatensatzes durch das Anwendungsprogramm, sowie die anschließende Entschlüsselung durch den Transaktionsserver für eine bessere Übersichtlichkeit nicht berücksichtigt.

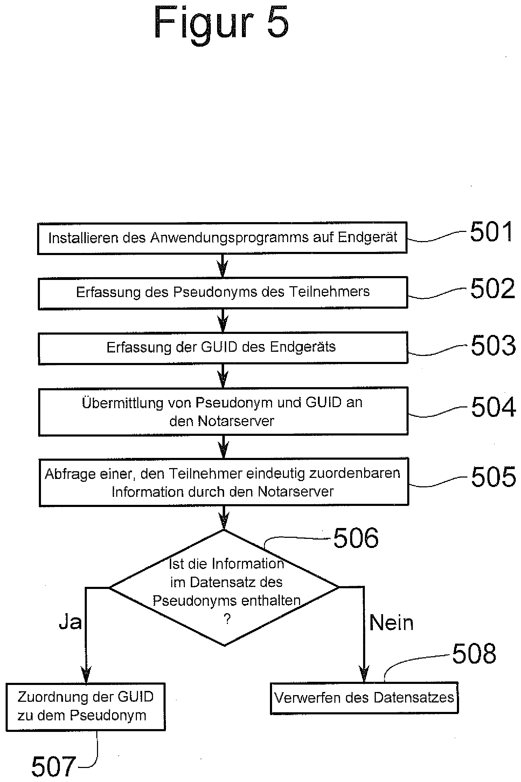

Figur 5 ist ein Flussdiagramm eines erfindungsgemäßen Verfahrens zur Registrierung eines Anwendungsprogramms auf einen Teilnehmer.

In einem ersten Schritt 501 wird das Anwendungsprogramm auf einem Endgerät des Teilnehmers installiert. Ein Endgerät kann hierbei beispielsweise ein Smartphone, ein Personal Computer, ein Tablet PC oder Ähnliches sein. In einem zweiten Schritt 502 wird das Pseudonym des Teilnehmers, welcher das Anwendungsprogramm registrieren möchte, durch das Anwendungsprogramm erfasst. Die Erfassung des Pseudonyms kann wahlweise noch während der Installation des Anwendungsprogramms erfolgen oder danach. Die Erfassung des Pseudonyms selbst kann beispielsweise durch Einlesen eines Barcodes oder Auslesen eines Speichermediums erfolgen. Das Pseudonym des Teilnehmers wird nach der Erfassung desselben durch das Anwendungsprogramm gespeichert. Anschließend wird durch das Anwendungsprogramm der Globally Unique Identifier des Endgeräts erfasst 503. Dieser ist üblicherweise in der Hardware des Endgeräts hinterlegt. Nachdem Pseudonym und GUID erfasst wurden, werden sie an den Notarserver übermittelt 504. Der Notarserver identifiziert nach Eingang von Pseudonym und GUID den Teilnehmer anhand seines Pseudonyms und fragt über einen bei der Anmeldung durch eine Kanal-Information spezifizierten Kommunikationskanal eine zusätzliche Teilnehmer-Information des Teilnehmers ab 504. Der entsprechende Kommunikationskanal kann beispielsweise durch eine E-Mail Adresse definiert sein.

Eine Teilnehmer-Information kann beispielsweise das Geburtsdatum, die Adresse, die Personalausweisnummer des Teilnehmers oder Ähnliches sein. Hierbei ist es notwendig, dass die Teilnehmer-Information eingangs bei der Anmeldung des Teilnehmers beim Notarserver im Datensatz des Teilnehmers hinterlegt wurde und dem Teilnehmer durch den Notarserver zugeordnet werden kann. Der Notarserver überprüft nach Eingang der Teilnehmer-Information, ob die übermittelte Teilnehmer-Information im Datensatz, welcher dem Pseudonym auf dem Notarserver zugeordnet ist, enthalten ist 506. Ist dies der Fall, wird die GUID des Endgeräts, auf dem das Anwendungsprogramm installiert wurde, dem Datensatz des Pseudonyms zugeordnet 507. Ist die Teilnehmer-Information jedoch nicht im Datensatz des Pseudonyms enthalten, wird der Datensatz verworfen und die Registrierung abgebrochen 508.

Die Registrierung des Anwendungsprogramms auf einen Teilnehmer ermöglicht es dem Notarserver, eine Authentifizierungsanfrage an dieses Anwendungsprogramm zu schicken. Dies trägt gemäß den obigen Ausführungen zur Sicherheit des Verfahrens bei. Weiter steigert eine Registrierung des Anwendungsprogramms die Anwenderfreundlichkeit, da das Pseudonym des Teilnehmers, auf den das Anwendungsprogramm registriert ist, nicht bei jedem Transaktionsvorgang erneut eingelesen werden muss, sondern durch das Anwendungsprogramm dem Transaktionsdatensatz automatisch hinzugefügt wird.

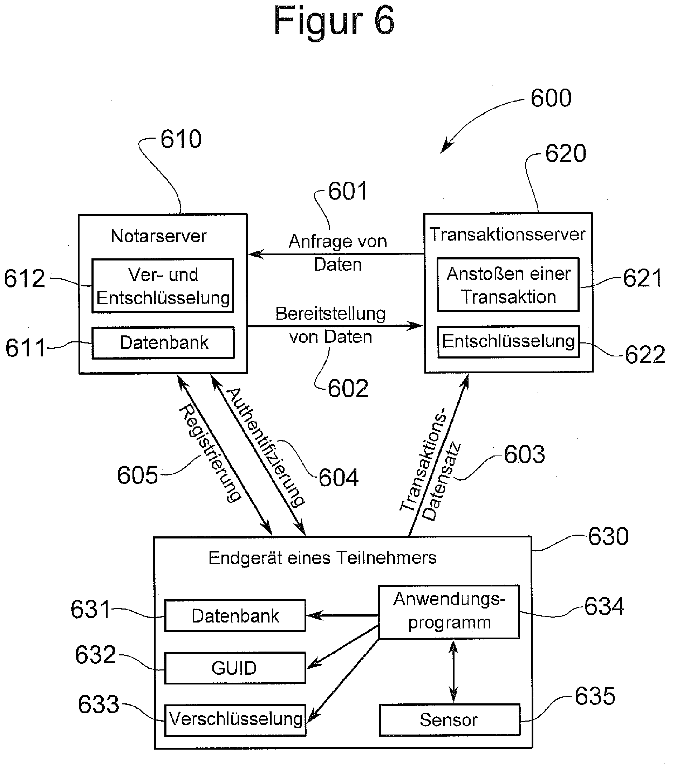

Die Figur 6 zeigt ein System 600, welches die Durchführung eines Verfahrens gemäß einer Ausführungsform der Erfindung ermöglicht. Hierzu werden im Wesentlichen ein Notarserver 610, ein Transaktionsserver 620 sowie das Endgerät eines Teilnehmers 630 benötigt.

Der Notarserver 610 enthält eine Datenbank 611, auf welcher zumindest die Zuordnung von Pseudonymen zu Teilnehmern sowie die Transaktionsdaten der Teilnehmer hinterlegt sind. Für den Fall, dass gemäß obiger Ausführung das Pseudonym eines Teilnehmers dessen verschlüsselter Datensatz ist, enthält der Notarserver weiterhin Mittel zur Ver- und Entschlüsselung 612 von Datensätzen der Teilnehmer.

Dies kann beispielsweise ein Prozessor mit zugeordnetem Datenspeicher sein, wobei der Datenspeicher einen vom Prozessor ausführbaren Programmcode enthält, der Computerausführbare Anweisungen enthält, welche angepasst sind um einen Datensatz gemäß eines bestimmten Verschlüsselungsverfahrens zu ver- und entschlüsseln.

Der Transaktionsserver 620 enthält Mittel zum Anstoßen einer Transaktion 621, was zum Beispiel im Falle einer Finanztransaktion eine Kommunikationsverbindung mit einer Bank sein kann. Für den Fall, dass zur Erhöhung der Sicherheit des Verfahrens die Transaktionsdatensätze durch das Anwendungsprogramm verschlüsselt werden, enthält der Transaktionsserver 620 weiterhin Mittel zur Entschlüsselung 622 der Transaktionsdatensätze, welche analog zu 612 ausgeführt sein können.

Das Endgerät eines Teilnehmers 630 enthält eine Datenbank 631, in welcher beispielsweise nach erfolgter Registrierung eines Anwendungsprogramms das Pseudonym des Teilnehmers gespeichert ist. Weiter enthält das Endgerät eines Teilnehmers 630 eine Nummern- oder Zeichenfolge, welche das Endgerät eindeutig identifiziert 632, zum Beispiel die GUID des Endgeräts. Für den Fall, dass Transaktionsdatensätze verschlüsselt an den Transaktionsserver übermittelt werden sollen, enthält das Endgerät eines Teilnehmers weiterhin Mittel zur Verschlüsselung von Datensätzen 633, welche analog zu 612 ausgeführt sein können. Weiter enthält das Endgerät 630 das Anwendungsprogramm 634, welches zur Durchführung der Transaktionen benötigt wird. Dieses ist in der Lage auf die GUID 632, auf die Datenbank 631 sowie auf die Mittel zur Verschlüsselung 633 zuzugreifen. Weiter enthält das Endgerät 630 einen Sensor 635, mit dem Pseudonyme von Teilnehmern erfasst werden können. Dieser Sensor ist operativ an das Anwendungsprogramm gekoppelt, sodass das Anwendungsprogramm Informationen vom Sensor empfangen kann.

Zwischen dem Endgerät 630 und dem Notarserver 610 bestehen Kommunikationskanäle, welche zur Authentifizierung eines Teilnehmers 604 sowie zur Registrierung eines Anwendungsprogramms auf einen Teilnehmer 605 genutzt werden können.

Weiter besteht ein Kommunikationskanal zwischen dem Endgerät 630 und dem Transaktionsserver 620, über welchen Transaktionsdatensätze 603 vom Endgerät an den Transaktionsserver übermittelt werden. Da der Transaktionsserver 620 Pseudonyme zunächst nicht verarbeiten kann, besteht zwischen dem Transaktionsserver 620 und dem Notarserver 610 ebenfalls eine Kommunikationsverbindung, über welche der Transaktionsserver 620 Daten von Teilnehmern anfragen kann 601, woraufhin der Notarserver 610 dem Transaktionsserver 620 entsprechende Daten bereitstellen kann 602.

Anhand des Systems 600 wird im Folgenden das Verfahren gemäß Figur 4 erläutert. Dabei wird davon ausgegangen, dass das Anwendungsprogramm auf einen der Teilnehmer registriert ist. Zum Zwecke einer besseren Übersichtlichkeit wird hierbei nur ein Transaktionsserver eingesetzt. Weiter ist auch nur ein Endgerät eines Teilnehmers dargestellt, welches stellvertretend für eine Vielzahl von Endgeräten der Teilnehmer anzusehen ist.

Zunächst werden die Pseudonyme der Teilnehmer der Transaktion durch den Sensor 635 erfasst und an das Anwendungsprogramm 634 weitergegeben. Zusätzlich erfolgt eine Erfassung der Transaktionsparameter durch das Anwendungsprogramm 634 sowie eine Erfassung der GUID 632 des Endgeräts 630. Das in der Datenbank 631 enthaltene Pseudonym des ersten Teilnehmers wird ebenfalls durch das Anwendungsprogramm 634 ausgelesen und dem Transaktionsdatensatz hinzugefügt. Der so entstandene Datensatz bestehend aus dem Pseudonym des ersten Teilnehmers, den Pseudonymen der weiteren Teilnehmer, der GUID des Endgeräts, sowie den Transaktionsparametern, wird nun verschlüsselt 633. Der verschlüsselte Transaktionsdatensatz wird nun entlang des Kommunikationskanals 603 an den Transaktionsserver 620 übermittelt. Dieser führt die Entschlüsselung 622 des Transaktionsdatensatzes durch. Anschließend extrahiert der Transaktionsserver die Pseudonyme der Teilnehmer sowie die GUID des Endgeräts, auf welchem der Transaktionsdatensatz erstellt wurde, aus dem Transaktionsdatensatz. Die zu den Pseudonymen gehörenden Transaktionsdaten werden nun durch den Transaktionsserver 620 am Notarserver 610 angefragt 601. Weiter wird auch die zuvor extrahierte GUID an den Notarserver übermittelt. Der Notarserver 610 prüft nun, ob die erhaltene GUID im Datensatz des ersten Teilnehmers hinterlegt ist. Ist dies nicht der Fall, wird das Verfahren abgebrochen, da davon ausgegangen werden muss, dass das Anwendungsprogramm gegen den Willen des ersten Teilnehmers verwendet wird, beispielsweise aufgrund einer Extraktion des Anwendungsprogramms vom Endgerät des ersten Teilnehmers. Stimmt jedoch die empfangene GUID mit der GUID überein, welche im Datensatz des ersten Teilnehmers enthalten ist, wird eine Authentifizierungsanfrage 604 an die Endgeräte 630 der weiteren Teilnehmer gesendet. Wird die Authentifizierungsanfrage von wenigstens einem Teilnehmer nicht bestätigt, so wird das Verfahren abgebrochen, da davon ausgegangen werden muss, dass das Pseudonym eines Teilnehmers manipuliert worden ist. Wird jedoch die Authentifizierungsanfrage von allen Teilnehmern bestätigt, ordnet der Notarserver den Pseudonymen die entsprechenden Teilnehmer mit den jeweiligen Transaktionsdaten zu und übermittelt die Transaktionsdaten der Teilnehmer 602 an den Transaktionsserver 620. Dieser führt nun unter Verwendung der zuvor empfangenen Transaktionsparameter die Transaktion durch 621 oder stößt sie an.

### Bezugszeichenliste

- 601: Anfrage von Daten
- 602: Bereitstellung von Daten
- 603: Übermittlung eines Transaktionsdatensatzes
- 604: Authentifizierung
- 605: Registrierung
- 610: Notarserver
- 611: Datenbank
- 612: Ver- und Entschlüsselung
- 620: Transaktionsserver
- 621: Anstoßen einer Transaktion
- 622: Entschlüsselung
- 630: Endgerät eines Teilnehmers
- 631: Datenbank
- 632: GUID,
- 633: Verschlüsselung
- 634: Anwendungsprogramm
- 635: Sensor

## Patentansprüche

1. Verfahren zur Durchführung von Transaktionen zwischen einer Anzahl von Teilnehmern, wobei jedem der Teilnehmer ein eindeutiges Pseudonym zugeordnet ist, wobei das Pseudonym die verschlüsselten Transaktionsdaten des Teilnehmers beinhaltet, wobei Transaktionsdaten eines Teilnehmers transaktionslimitierende Daten sind, ohne deren Kenntnis eine Transaktion nicht durchgeführt werden kann und die für jede Transaktion des Teilnehmers gleich bleiben, wobei die Zuordnung eines Pseudonyms zu einem Teilnehmer, sowie der zur Entschlüsselung der Transaktionsdaten benötigte Schlüssel als Teilnehmer-Datensatz auf einem Notarserver (610) gespeichert sind, wobei das Verfahren das Bereitstellen eines auf einem Endgerät (630) eines ersten der Teilnehmer installierten Anwendungsprogramms (634) und mindestens eines Transaktionsservers (620) beinhaltet, wobei das Anwendungsprogramm (634) auf den ersten Teilnehmer registriert (605) ist, sodass dessen Pseudonym dem Anwendungsprogramm (634) bekannt ist, wobei ein das Endgerät (630) des ersten Teilnehmers eindeutig identifizierender Parameter (632) in dem Teilnehmer-Datensatz des ersten Teilnehmers enthalten ist, wobei das Anwendungsprogramm den das Endgerät (630) des ersten Teilnehmers eindeutig identifizierender Parameter (632) ermitteln kann, wobei das Verfahren folgende Schritte beinhaltet:
- Optisches Erfassen eines das Pseudonym eines zweiten der Teilnehmer enthaltenen QR-Codes durch das Anwendungsprogramm (634),
- Erfassen von Transaktionsparametern durch das Anwendungsprogramm (634),
- Übermittlung (603) der Pseudonyme des ersten und zweiten Teilnehmers, der Transaktionsparameter und des das Endgerät (630) eindeutig identifizierenden Parameters (632) von dem Anwendungsprogramm (634) an einen der Transaktionsserver (620) über das Internet,
- Übermittlung (601) der Pseudonyme und des das Endgerät (630) eindeutig identifizierenden Parameters (632) von dem mindestens einen Transaktionsserver (620) an den Notarserver (610),
- Identifikation der Teilnehmer anhand der Pseudonyme durch den Notarserver (610),
- Überprüfung, ob der das Endgerät (630) eindeutig identifizierende Parameters (632) in dem Teilnehmer-Datensatz des ersten Teilnehmers enthalten ist,
- Wenn der das Endgerät (630) eindeutig identifizierende Parameter (632) in dem Datensatz des ersten Teilnehmers enthalten ist, Entschlüsselung der in dem Pseudonym der Teilnehmer enthaltenen Transaktionsdaten,
- Übermittlung (602) der Transaktionsdaten der Teilnehmer an den mindestens einen Transaktionsserver (620) durch den Notarserver (610),
- Durchführung der Transaktion zwischen dem ersten Teilnehmer und dem mindestens einen weiteren Teilnehmer anhand der Transaktionsparameter durch den mindestens einen Transaktionsserver (620).

2. Verfahren nach Anspruch 1, wobei Transaktionsparameter Daten sind, welche für jede Transaktion des Teilnehmers unterschiedlich sein können und nicht transaktionslimitierend sind.

3. Verfahren nach einem der vorhergehenden Ansprüche, wobei es sich bei dem ein Endgerät eindeutig identifizierenden Parameter um einen Parameter handelt, welcher in der Hardware des Endgeräts hinterlegt ist.

4. Verfahren nach einem der vorhergehenden Ansprüche, wobei dem Pseudonym des ersten und/oder zweiten der Teilnehmer folgende Daten zugeordnet sind:
- den Teilnehmer eindeutig identifizierende Informationen,
- dem Teilnehmer eindeutig zugeordnete Kanal-Informationen zur Spezifizierung eines Kommunikationskanals zwischen Notarserver (610) und Anwendungsprogramm (634),
- Transaktionsdaten des Teilnehmers,
wobei die Daten mit dem zugeordneten Pseudonym auf dem Notarserver (610) gespeichert sind.

5. Verfahren nach einem der vorhergehenden Ansprüche, wobei zumindest ein Teil des Transaktionsdatensatzes (603), die Pseudonyme der Teilnehmer und die Transaktionsparameter beinhaltend, vor der Übermittlung von dem Anwendungsprogramm (634) zu dem mindestens einen Transaktionsserver (620) durch das Anwendungsprogramm (634) verschlüsselt und durch den mindestens einen Transaktionsserver (620) nach Eingang des Transaktionsdatensatzes (603) wieder entschlüsselt wird.

6. Verfahren nach Anspruch 5, wobei jeder Art von Transaktion und/oder jeder Transaktion selbst eine Methode der Verschlüsselung und/oder der verwendete Schlüssel zur Verschlüsselung des Transaktionsdatensatzes (603) zugeordnet sind.

7. Verfahren nach einem der vorhergehenden Ansprüche, wobei eine Transaktion nur durchgeführt wird, wenn der mindestens eine weitere Teilnehmer und/oder alle weiteren beteiligten Teilnehmer nach Eingang eines Transaktionsdatensatzes (603) bei einem Transaktionsserver (620) durch einen Transaktionsserver (620) und/oder einen Notarserver (610) authentifiziert (604) wurden.

8. Verfahren nach Anspruch 7, wobei jeder Teilnehmer über mindestens ein Anwendungsprogramm (634) verfügt, das auf den jeweiligen Teilnehmer registriert ist, wobei die Authentifizierung (604) des mindestens einen weiteren Teilnehmers folgende Schritte beinhaltet:
- Festlegen eines Gültigkeitszeitfensters für einen Transaktionsdatensatz (603),
- Einfügen eines Zeitstempels in den Transaktionsdatensatz (603) durch das Anwendungsprogramm (634),
- Überprüfen durch den Transaktionsserver (620), ob der Empfang und/oder die Verarbeitung des Transaktionsdatensatzes (603) durch den Transaktionsserver (620) in das Gültigkeitszeitfenster des Transaktionsdatensatzes (603) fällt,
- Falls dies der Fall ist: Anfordern einer Bestätigung des Transaktionsauftrags über das Anwendungsprogramm (634) des mindestens einen weiteren Teilnehmers,
- Falls dies nicht der Fall ist: Verwerfen des Transaktionsdatensatzes (603).

9. Verfahren nach einem der vorhergehenden Ansprüche, wobei die Registrierung (605) des Anwendungsprogramms (634) auf einen Teilnehmer folgende Schritte beinhaltet:
- Sensorische Erfassung des Pseudonyms des Teilnehmers durch das Anwendungsprogramm (634),
- Ermitteln eines, das Endgerät (630), auf dem die Anwendungsprogramm (634) installiert ist, eindeutig identifizierenden Parameters (632),
- Übermitteln des Pseudonyms des Teilnehmers und des das Endgerät (630) eindeutig identifizierenden Parameters (632) an den Notarserver (610),
- Übermitteln einer, dem Teilnehmer durch den Notarserver (610) eindeutig zuordenbaren Teilnehmer-Information an den Notarserver (610),
- Überprüfen durch den Notarserver (610), ob die dem Teilnehmer zuordenbare Information in dem Datensatz enthalten ist, dem das Pseudonym des Teilnehmers zugeordnet ist.

10. System zum Durchführen von Transaktionen zwischen einer Anzahl von Teilnehmern, wobei das System mindestens einen Transaktionsserver (620), einen Notarserver (610) und ein Endgerät (630) eines ersten Teilnehmers beinhaltet,
wobei jedem der Teilnehmer ein eindeutiges Pseudonym zugeordnet ist, wobei das Pseudonym die verschlüsselten Transaktionsdaten des Teilnehmers beinhaltet, wobei Transaktionsdaten eines Teilnehmers transaktionslimitierende Daten sind, ohne deren Kenntnis eine Transaktion nicht durchgeführt werden kann und die für jede Transaktion des Teilnehmers gleich bleiben, wobei die Zuordnung eines Pseudonyms zu einem Teilnehmer, sowie der zur Entschlüsselung der Transaktionsdaten benötigte Schlüssel als Teilnehmer-Datensatz auf dem Notarserver (610) gespeichert sind,
wobei auf dem Endgerät (630) des ersten Teilnehmers ein Anwendungsprogramms (634) installiert ist, wobei das Anwendungsprogramm (634) auf den ersten Teilnehmer registriert (605) ist, sodass dessen Pseudonym dem Anwendungsprogramm (634) bekannt ist, wobei ein das Endgerät (630) des ersten Teilnehmers eindeutig identifizierender Parameter (632) in dem Teilnehmer-Datensatz des ersten Teilnehmers enthalten ist, wobei das Anwendungsprogramm den das Endgerät (630) des ersten Teilnehmers eindeutig identifizierender Parameter (632) ermitteln kann,
wobei das auf dem Endgerät (630) des ersten Teilnehmers installierte Anwendungsprogramm (634) dazu ausgebildet ist:
- einen das Pseudonym eines zweiten der Teilnehmer enthaltenden QR-Code optisch zu erfassen,
- Transaktionsparameter zu erfassen, und
- die Pseudonyme des ersten und zweiten Teilnehmers, die Transaktionsparameter und den das Endgerät (630) eindeutig identifizierenden Parameter (632) an den Transaktionsserver (620) über das Internet zu übermitteln,
wobei der Transaktionsserver (620) dazu ausgebildet ist, die Pseudonyme und den das Endgerät (630) eindeutig identifizierenden Paramater an den Notarserver (610) zu übermitteln,
wobei der Notarserver dazu ausgebildet ist:
- die Teilnehmer anhand der Pseudonyme zu identifizieren,
- zu überprüfen, ob der das Endgerät (630) eindeutig identifizierende Parameter (632) in dem Teilnehmer-Datensatz des ersten Teilnehmers enthalten ist,
- wenn der das Endgerät (630) eindeutig identifizierende Parameter (632) in dem Datensatz des ersten Teilnehmers enthalten ist, den in den Pseudonymen der Teilnehmer enthaltenen Transaktionsdaten zu entschlüsseln, und
- die Transaktionsdaten der Teilnehmer an den mindestens einen Transaktionsserver (620) zu übermitteln,
wobei der Transaktionsserver (620) ferner dazu ausgebildet ist, die Transaktion zwischen dem ersten Teilnehmer und dem mindestens einen weiteren Teilnehmer anhand der Transaktionsparameter durchzuführen.

11. Computerprogrammprodukt, welches angepasst ist um die zuvor beschrieben Verfahrensschritte eines der Ansprüche 1-9 durchzuführen.

## Claims

1. Process for performing transactions among a number of participants, in which every participant has a unique pseudonym assigned to him, in which a participant's pseudonym comprises his encrypted transaction data, a participant's transaction data being transaction-limiting data, without knowledge of which a transaction cannot be performed and which remains the same for every transaction of the participant, in which the assignment of a pseudonym to a participant, and the key required to decrypt the transaction data are stored in the form of a participant record on a notary server (610), the process comprising supplying an application program (634) installed on a piece of terminal equipment (630) of a first participant and at least one transaction server (620), the application program (634) being registered to the first participant (605), so that his pseudonym is known to the application program (634), a parameter (632) uniquely identifying the first participant's piece of terminal equipment (630) being contained in the first participant's record, the application program being able to determine the parameter (632) uniquely identifying the first participant's piece of terminal equipment (630), the process comprising the following steps:
- Optical reading, by the application program (634), of a QR code containing the pseudonym of a second participant;
- Collection of transaction parameters by the application program (634);
- Sending (603) the pseudonyms of the first and second participant, the transaction parameters, and the parameter (632) uniquely identifying the piece of terminal equipment (630) from the application program (634) to a transaction server (620) over the Internet;
- Sending (601) the pseudonyms and the parameter (632) uniquely identifying the piece of terminal equipment (630) from the at least one transaction server (620) to the notary server (610);
- Identification of the participants by the notary server on the basis of the pseudonyms (610);
- Checking whether the parameter (632) uniquely identifying the piece of terminal equipment (630) is contained in the first participant's record;
- If the parameter (632) uniquely identifying the piece of terminal equipment (630) is contained in the first participant's record, decryption of the transaction contained in the participants' pseudonym;
- Sending (602) the participants' transaction data to the at least one transaction server (620) by the notary server (610);
- Performance, by the at least one transaction server (620), of the transaction between the first participant and the at least one other participant on the basis of the transaction parameters.

2. The process described in claim 1, in which transaction parameters are data that can be different for every transaction of the participant and are not transaction-limiting.

3. The process described in one of the preceding claims, in which the parameter uniquely identifying the piece of terminal equipment is a parameter that is stored in the hardware of the piece of terminal equipment.

4. The process described in one of the preceding claims, in which the following data is assigned to the pseudonym of the first and/or second participant:
- Information uniquely identifying the participant;
- channel information uniquely assigned to the participant to specify a communication channel between the notary server (610) and the application program (634);
- The participant's transaction data;
the data being stored on the notary server (610) with the assigned pseudonym.

5. The process described in one of the preceding claims, in which at least part of the transaction record (603) comprising the pseudonyms of the participants and the transaction parameters, is encrypted by the application program (634) before being sent from the application program (634) to the at least one transaction server (620), and is decrypted again by the at least one transaction server (620) after the transaction record (603) is received.

6. The process described in claim 5, in which every type of transaction and/or every transaction itself is assigned an encryption method and/or key used for encryption of the transaction record (603).

7. The process described in one of the preceding claims, in which a transaction is only performed if the at least one other participant and/or all other participants involved have been authenticated (604) by a transaction server (620) and/or a notary server (610) after a transaction server (620) receives a transaction record (603).

8. The process described in claim 7, in which every participant has at least one application program (634) that is registered to the respective participant, the authentication (604) of the at least one other participant comprising the following steps:
- Establishment of a time window of validity for a transaction record (603);
- Insertion of a time stamp into the transaction record (603) by the application program (634),
- Checking, by the transaction server (620), whether the receipt and/or processing of the transaction record (603) by the transaction server (620) falls within the time window of validity of the transaction record (603);
- If this is the case: requesting confirmation of the transaction request through the application program (634) of the at least one other participant;
- If this is not the case: discarding the transaction record (603).

9. The process described in one of the preceding claims, in which the registration (605) of the application program (634) to a participant comprises the following steps:
- Sensory collection of the participant's pseudonym by the application program (634);
- Determination of a parameter (632) uniquely identifying the piece of terminal equipment (630) on which the application program (634) is installed;
- Sending the participant's pseudonym and the parameter (632) uniquely identifying the piece of terminal equipment (630) to the notary server (610);
- Sending to the notary server (610) a piece of participant information that can be uniquely assigned to the participant by the notary server (610);
- Checking, by the notary server (610), whether the information that can be assigned to the participant is contained in the record to which the participant's pseudonym is assigned.

10. system for performing transactions among a number of participants, the system comprising at least one transaction server (620) and one notary server (610) and a piece of terminal equipment of a first participant,
in which every participant has a unique pseudonym assigned to him, in which a participant's pseudonym comprises his encrypted transaction data, a participant's transaction data being transaction-limiting data, without knowledge of which a transaction cannot be performed and which remains the same for every transaction of the participant, in which the assignment of a pseudonym to a participant, and the key required to decrypt the transaction data are stored in the form of a participant record on a notary server (610),
an application program (634) being installed on the piece of terminal equipment (630) of the first participant and at least one transaction server (620), the application program (634) being registered to the first participant (605), so that his pseudonym is known to the application program (634), a parameter (632) uniquely identifying the first participant's piece of terminal equipment (630) being contained in the first participant's record, the application program being able to determine the parameter (632) uniquely identifying the first participant's piece of terminal equipment (630),
the application program (634) being installed on the piece of terminal equipment (630) of the first participant being adapted to:
- Optically acquire a QR code containing the pseudonym of the second participant.
- Acquire transaction parameters,
- Sending the pseudonyms of the first and second participant, the transaction parameters, and the parameter (632) uniquely identifying the piece of terminal equipment (630) to a transaction server (620) over the Internet,
wherein the transaction server (620) is adapted to send the pseudonyms and the parameter (632) uniquely identifying the piece of terminal equipment (630) to the notary server (610),
wherein the notary server is adapted to:
- identify the participants on the basis of the pseudonyms (610),
- check whether the parameter (632) uniquely identifying the piece of terminal equipment (630) is contained in the first participant's record,
- if the parameter (632) uniquely identifying the piece of terminal equipment (630) is contained in the first participant's record, decrypt of the transaction contained in the participants' pseudonym, and
- send the participants' transaction data to the at least one transaction server (620);
wherein the transaction server (620) is adapted to execute the transaction between the first participant and the at least one other participant on the basis of the transaction parameters.

11. Computer program product that is adapted to perform the previously described process steps of one of claims 1-9.

## Revendications

1. Procédé de réalisation de transactions entre un certain nombre de participants, où un pseudonyme univoque est attribué à chacun des participants, où le pseudonyme contient les données de transaction encryptées du participant, où les données de transaction d'un participant sont des données de limitation de transaction sans la connaissance desquelles une transaction ne peut être exécutée et qui restent identiques pour chaque transaction du participant, où l'attribution d'un pseudonyme à un participant ainsi que la clé nécessaire pour le décryptage des données de transaction sont stockées sous forme d'un ensemble de données sur un serveur notarial (610), où le procédé contient la mise à disposition d'un programme d'application (634) installé sur un appareil terminal (630) d'un premier parmi les participants et contient au moins un serveur de transactions (620), où le programme d'application (634) est enregistré (605) sur le premier participant de sorte que son pseudonyme est connu par le programme d'application (634), où un paramètre (632) identifiant de manière univoque l'appareil terminal (630) du premier participant est contenu dans l'ensemble de données de participant du premier participant, où le programme d'application peut déterminer le paramètre (632) identifiant de manière univoque l'appareil terminal (630) du premier participant, où le procédé contient les étapes suivantes :
- saisie optique d'un code QR contenant le pseudonyme d'un deuxième parmi les participants, par le programme d'application (634),
- saisie de paramètres de transaction par le programme d'application (634),
- transmission (603) des pseudonymes des premier et deuxième participants, des paramètres de transaction et du paramètre (632) identifiant de manière univoque l'appareil de terminal (630) par le programme d'application (634) au niveau de l'un des serveurs de transactions (620) par l'intermédiaire de l'internet,
- transmission (601) des pseudonymes et du paramètre (632) identifiant de manière univoque l'appareil terminal (630) par l'au moins un serveur de transactions (620) vers le serveur notarial (610),
- identification des participants au moyen des pseudonymes par le serveur notarial (610),
- vérification si le paramètre (632) identifiant de manière univoque l'appareil terminal (630) est contenu dans l'ensemble de données de participant du premier participant,
- si le paramètre (632) identifiant de manière univoque l'appareil terminal (630) est contenu dans l'ensemble de données du premier participant, décryptage des données de transaction contenues dans le pseudonyme des participants,
- transmission (602) des données de transaction des participants à l'au moins un serveur de transaction (620) par le serveur notarial (610),
- exécution de la transaction entre le premier participant et l'au moins un autre participant au moyen des paramètres de transaction par l'au moins un serveur de transactions (620).

2. Procédé selon la revendication 1, dans lequel des paramètres de transaction sont des données, lesquelles peuvent être différentes pour chaque transaction du participant et qui ne sont pas limitatives pour la transaction.

3. Procédé selon l'une des revendications précédentes, dans lequel il s'agit d'un paramètre, lequel est enregistré dans le matériel informatique de l'appareil terminal, dans le cas du paramètre identifiant de manière univoque l'appareil terminal.

4. Procédé selon l'une des revendications précédentes, dans lequel les données suivantes sont associées avec le pseudonyme du premier et/ou deuxième parmi les participants :
- des informations identifiant de manière univoque le participant,
- des informations de canal attribuées de manière univoque au participant pour la spécification d'un canal de communication entre un serveur notarial (610) et un programme d'application (634),
- des données de transaction du participant,
où les données sont stockées avec le pseudonyme associé sur le serveur notarial (610).

5. Procédé selon l'une des revendications précédentes, dans lequel au moins une partie de l'ensemble de données de transaction (603, contenant les pseudonymes des participants et les paramètres de transaction, est encryptée avant la transmission du programme d'application (634) vers l'au moins un serveur de transactions (620) par le programme d'application (634) et est de nouveau décryptée par l'au moins un serveur de transactions (620) après l'entrée dans l'ensemble de données de transaction (603).

6. Procédé selon la revendication 5, dans lequel à chaque type de transaction, et/ou à chaque transaction elle-même, est associé un procédé d'encryptage et/ou la clé employée pour l'encryptage de l'ensemble de données de transaction (603).

7. Procédé selon l'une des revendications précédentes, dans lequel une transaction est uniquement exécutée si l'au moins un autre participant et/ou tous les participants impliqués ont été authentifiés (604) auprès d'un serveur de transactions (620) par un serveur de transactions (620) et/ou un serveur notarial (610) après l'entrée dans un ensemble de données de transaction (603).

8. Procédé selon la revendication 4, dans lequel chaque participant dispose au moins d'un programme d'application (634) qui est enregistré au nom du participant respectif, où l'authentification (604) de l'au moins un autre participant contient les étapes suivantes :
- définition d'une fenêtre temporelle de validité pour un ensemble de données de transaction (603),
- insertion d'une fenêtre temporelle dans l'ensemble de données de transaction (603) par le programme d'application (634),
- vérification, par le serveur de transactions (620), si la réception et/ou le traitement de l'ensemble de données de transaction (603) est dans la fenêtre temporelle de validité de l'ensemble de données de transaction (603) par le serveur de transactions (620),
- si c'est le cas : demande d'une confirmation de la commande de transaction par l'intermédiaire du programme d'application (634) de l'au moins un autre participant,
- si ce n'est pas le cas : rejet de l'ensemble de données de transaction (603).

9. Procédé selon l'une des revendications précédentes, dans lequel l'enregistrement (605) du programme d'application (634) sur un participant contient les étapes suivantes :
- saisie sensorielle du pseudonyme du participant par le programme d'application (634),
- détermination d'un paramètre (632) identifiant de manière univoque l'appareil terminal (630) sur lequel est installé le programme d'application (634),
- transmission du pseudonyme du participant et du paramètre (632) identifiant de manière univoque l'appareil terminal (630) vers le serveur notarial (610),
- transmission d'une information concernant le participant pouvant être attribuée de manière univoque au participant par le serveur notarial (610),
- vérification, par le serveur notarial (610), si l'information attribuable de manière univoque au participant est contenue dans l'ensemble de données auquel est associé le pseudonyme du participant.

10. Système destiné à l'exécution de transactions entre un certain nombre de participants, où le système contient au moins un serveur de transactions (620), un serveur notarial (610) et un appareil terminal (630) d'un premier participant,
où un pseudonyme univoque est attribué à chacun des participants, où le pseudonyme contient les données de transaction encryptées du participant, où les données de transaction d'un participant sont des données de limitation de transaction sans la connaissance desquelles une transaction ne peut être exécutée et qui restent identiques pour chaque transaction du participant, où l'attribution d'un pseudonyme à un participant, ainsi que la clé nécessaire pour le décryptage des données de transaction, sont stockées sous forme d'un ensemble de données sur un serveur notarial (610),
où, sur l'appareil terminal (630) du premier participant, est installé un programme d'application (634), où le programme d'application (634) est enregistré (605) sur le premier participant de sorte que son pseudonyme est connu par le programme d'application (634), où un paramètre (632) identifiant de manière univoque l'appareil terminal (630) du premier participant est contenu dans l'ensemble de données de participant du premier participant, où le programme d'application peut déterminer le paramètre (632) identifiant de manière univoque l'appareil terminal (630) du premier participant,
où le programme d'application installé sur l'appareil terminal (630) du premier participant est conçu pour :
- la saisie optique d'un code QR contenant le pseudonyme d'un deuxième parmi les participants,
- la saisie de paramètres de transaction,
- la transmission des pseudonymes des premier et deuxième participants, des paramètres de transaction et du paramètre (632) identifiant de manière univoque l'appareil terminal (630) vers le serveur de transactions (620) par l'intermédiaire de l'internet,
où le serveur de transactions (620) est conçu pour transmettre les pseudonymes et le paramètre identifiant de manière univoque l'appareil terminal (630) vers le serveur notarial (610),
où le serveur notarial est conçu pour :
- identifier les participants au moyen des pseudonymes,
- vérifier si le paramètre (632) identifiant de manière univoque l'appareil terminal (630) est contenu dans l'ensemble de données de participant du premier participant,
- si le paramètre (632) identifiant de manière univoque l'appareil terminal (630) est contenu dans l'ensemble de données du premier participant, décrypter les données de transaction contenues dans les pseudonymes des participants, et
- transmettre les données de transaction des participants à l'au moins un serveur de transactions (620),
où le serveur de transactions (620) est en outre conçu pour exécuter la transaction entre le premier participant et l'au moins un autre participant au moyen des paramètres de transaction.

11. Produit de programme informatique, lequel est adapté pour exécuter les étapes de procédé précédemment décrites selon l'une des revendications 1 à 9.
